# EUROPÄISCHE PATENTSCHRIFT

(11) **EP 1 293 395 B1**
(45) Veröffentlichungstag und Bekanntmachung des Hinweises auf die Patenterteilung: **26.10.2005**
(21) Anmeldenummer: 02019108.6
(22) Anmeldetag: 29.08.2002
(51) Int. Cl.: B60R 21/16

(54) **Verfahren zum Falten eines Gassacks für ein Fahrzeuginsassen-Rückhaltesystem sowie gefalteter Gassack**
Method for folding an airbag for a vehicle passenger restraint system as well as the folded airbag
Procédé de pliage d'un coussin gonflable pour un système de retenue des occupants d'un véhicule et coussin gonflable ainsi plié

(30) Priorität: 14.09.2001 DE 10145479
(43) Veröffentlichungstag der Anmeldung: 19.03.2003
(73) Patentinhaber: TRW Automotive Safety Systems GmbH, 63743 Aschaffenburg (DE)
(72) Erfinder: Bohn, Stefan, 63773 Goldbach (DE); Fellhauer, Joachim, 63741 Nilkheim (DE)
(74) Vertreter: Sties, Jochen

(56) Entgegenhaltungen:
- EP-A- 1 179 455
- EP-A- 1 197 401
- DE-A- 19 845 721
- US-A1- 2002 078 664

## Beschreibung

Die Erfindung betrifft ein Verfahren zum Falten eines Gassacks für ein Fahrzeuginsassen-Rückhaltesystem. Die Erfindung betrifft ferner einen gefalteten Gassack für ein Fahrzeuginsassen-Rückhaltesystem.

Es sind eine Vielzahl von Verfahren bekannt, um einen Gassack für ein Fahrzeuginsassen-Rückhaltesystem aus einem ungefalteten Zustand in einen kompakt zusammengefalteten Zustand zu überführen, in welchem der Gassack in einem Gehäuse aufgenommen werden kann. Bei einem bekannten Verfahren werden Faltschwerter verwendet, die auf den Gassack aufgelegt werden und Faltkanten bilden, entlang denen der Gassack zusammengefaltet wird. Ein anderes bekanntes Verfahren verwendet Schieber, mit denen der Gassack zusammengeschoben wird. Der Nachteil aller dieser Verfahren liegt in dem hohen Aufwand zu seiner Durchführung.

Ein weiteres Verfahren zum Falten eines Gassacks ist in der DE 198 45 721 A1 offenbart. Hierbei wird der gefaltete Gassack in Richtung einer trichterförmigen Verjüngung gezogen und dabei unregelmäßig gefaltet.

Die Aufgabe der Erfindung besteht darin, ein Verfahren zum Falten eines Gassacks zu schaffen, das kostengünstig durchgeführt werden kann.

Zu diesem Zweck ist gemäß der Erfindung ein Verfahren zum Falten eines Gassacks mittels der folgenden Schritte vorgesehen: Zunächst wird der Gassack zwischen einer Unterlage und einer Gegenfläche mittels einer Aufblasvorrichtung entfaltet, wobei der Abstand zwischen der Unterlage und der Gegenfläche der Höhe eines Gehäuses entspricht, in das der Gassack nach dem Falten eingebracht werden soll. Dann wird ein Falttrichter bereitgestellt, der ein Ende mit großem Querschnitt und ein Ende mit kleinem Querschnitt aufweist, wobei der große Querschnitt größer oder gleich dem Querschnitt des zwischen der Unterlage und der Gegenfläche entfalteten Gassacks ist und der kleine Querschnitt dem Querschnitt des Gehäuses entspricht. Schließlich wird der Falttrichter beginnend mit seinem großen Querschnitt über den entfalteten Gassack gestülpt, so daß der Gassack vom Falttrichter auf der Unterlage bis auf den kleinen Querschnitt zusammengeschoben wird. Dieses Faltverfahren basiert also darauf, den Gassack von außen nach innen zusammenzuschieben. Anders als bei den aus dem Stand der Technik bekannten Schiebern, die in derselben Richtung verstellt werden, wie der Gassack zusammengeschoben wird, wird bei dem erfindungsgemäßen Verfahren das den Gassack faltende Bauteil, also der Falttrichter, am Gassack quasi vorbeigeschoben; die Bewegungsrichtung des Falttrichters ist etwa senkrecht zu der Richtung, in der die Wandung des Gassacks zusammengeschoben wird. Aufgrund der besonderen Querschnittsform des Falttrichters wird dabei die Wandung des Gassacks von außen nach innen zusammengeschoben. Der besondere Vorteil dieses Verfahrens liegt darin, daß der Gassack durch eine lineare Bewegung eines einzigen Bauteils gefaltet wird, nämlich des Falttrichters. Eine solche Bewegung kann mit besonders geringem Aufwand automatisiert werden. Ein weiterer Vorteil des erfindungsgemäßen Verfahrens liegt darin, daß nahezu jede beliebige Kontur des gefalteten Gassack-Paketes durch die entsprechende Form des kleinen Querschnittes des Falttrichters ohne jeglichen Mehraufwand erzielt werden kann. Wenn das Gehäuse zur Aufnahme des Gassacks einen beispielsweise ovalen Querschnitt hat, wird der Falttrichter mit ovalem kleinem Querschnitt ausgeführt. Auf diese Weise wird der Gassack zu einem Paket zusammengeschoben, das ebenfalls einen ovalen Querschnitt hat.

Ein erfindungsgemäßer Gassack, der mit dem erfindungsgemäßen Verfahren gefaltet ist, weist eine Wandung mit einer Vielzahl von chaotisch verlaufenden Einzelfalten auf, wobei der Gassack eine im wesentlichen ebene obere Außenseite und eine im wesentlichen ebene untere Außenseite aufweist und wobei an einer der Außenseiten mehr Einzelfalten vorhanden sind als an der anderen Außenseite. Diese Anordnung der Einzelfalten ergibt sich durch die Relativbewegung zwischen dem Falttrichter und der Wandung des Gassacks; die Wandung wird entsprechend der Bewegungsrichtung des Falttrichters verstärkt zu der in der Bewegungsrichtung des Falttrichters gesehen vorderen Außenseite des Gassacks geschoben, so daß sich dort die Wandung in kleinere Falten legt.

Vorzugsweise weist der gefaltete Gassack im Bereich der Außenseiten eine Wandung auf, die, ungeachtet der Einzelfalten, gestreckter verläuft als die andere Außenseite.

Vorteilhafte Ausgestaltungen der Erfindung ergeben sich aus den Unteransprüchen.

Die Erfindung wird nachfolgend anhand verschiedener Ausführungsformen gezeigt, die in den beigefügten Zeichnungen dargestellt sind. In diesen zeigen:
- Figur 1 in einer schematischen Ansicht eine erste Faltmaschine, mittels der der Gassack gemäß einer ersten Ausführungsform der Erfindung zusammengeschoben werden kann;
- Figur 2 in einer schematischen Ansicht eine zweite Faltmaschine, mittels der der Gassack gemäß einer zweiten Ausführungsform der Erfindung zusammengeschoben werden kann;
- Figur 3 schematisch einen Falttrichter einer dritten Faltmaschine, mittels der der Gassack gemäß einer dritten Ausführungsform der Erfindung zusammengeschoben werden kann;
- Figur 4 in einer Draufsicht eine Unterlage, die bei der Faltmaschine gemäß Figur 3 verwendet werden kann;
- Figur 5 einen Querschnitt durch eine vierte Faltmaschine, mittels der der Gassack gemäß einer vierten Ausführungsform der Erfindung zusammengeschoben werden kann; und
- Figur 6 in einer schematischen Ansicht eine fünfte Faltmaschine, mittels der der Gassack gemäß einer fünften Ausführungsform der Erfindung zusammengeschoben werden kann.

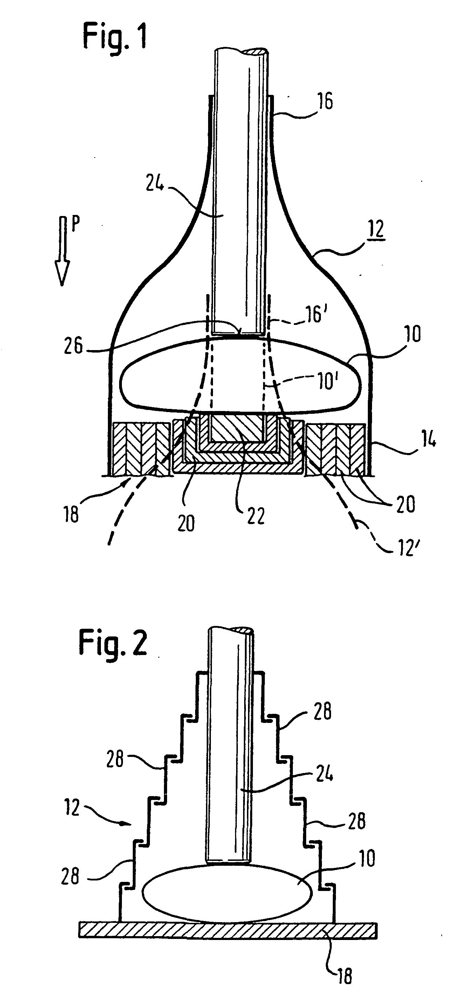

In Figur 1 ist eine Faltmaschine gezeigt, mittels der ein Gassack 10 durch ein Faltverfahren gemäß einer ersten Ausführungsform zusammengeschoben werden kann. Die Faltmaschine weist einen Falttrichter 12 auf, der hier die Form eines Flaschenhalses hat und sich von einem großen Querschnitt an einem Ende 14 des Falttrichters 12 kontinuierlich verengt bis hin zu einem Ende 16 mit kleinem Querschnitt. Der Falttrichter kann beispielsweise aus Blech oder Kunststoff bestehen und weist eine geschlossene Wand auf. Die Form des Querschnittes am Ende 14 ist nahezu beliebig; im einfachsten Fall hat der Falttrichter 12 am ersten Ende 14 einen kreisförmigen Querschnitt. Die Form des Querschnittes am zweiten Ende 16 entspricht der Querschnittsform eines Gehäuses (nicht dargestellt), in das der zusammengeschobene Gassack später eingesetzt werden soll. Der Falttrichter 12 kann am zweiten Ende 16 beispielsweise einen ovalen Querschnitt haben. Der Falttrichter 12 ist so angebracht, daß er ausgehend von der in Figur 1 gezeigten Stellung in der Richtung des Pfeils P verstellt werden kann, also nach unten.

Die Faltmaschine weist außerdem eine Unterlage 18 auf, die hier aus einer Vielzahl von kreisringförmigen Segmenten 20 und einem Mittelabschnitt 22 besteht. Der Mittelabschnitt 22 ist feststehend, während die Segmente 20 ebenfalls in der Richtung des Pfeils P nach unten verstellt werden können. Am Mittelabschnitt 22 ist eine (nicht dargestellte) Spannvorrichtung vorgesehen, mittels der der Gassack 10 montiert werden kann. Die Spannvorrichtung kann gebildet sein durch Haken, die in die Einblasöffnung des Gassacks eingreifen und die Wandung des Gassacks am Mittelabschnitt 22 festspannen. Am Mittelabschnitt 22 ist ferner eine (nicht dargestellte) Aufblasvorrichtung vorgesehen, mittels der im Inneren des Gassacks 10 ein leichter Überdruck erzeugt werden kann.

Die Faltmaschine weist schließlich einen Stempel 24 auf, dessen Stirnseite eine Gegenfläche 26 bildet, die dem Mittelabschnitt 22 in einem vorbestimmten Abstand gegenüberliegt. Dieser Abstand entspricht der Höhe des Gehäuses, in welchem der gefaltete Gassack später aufgenommen werden soll. Die Querschnittsform des Stempels 24 entspricht der Querschnittsform des zweiten Endes 16 des Falttrichters 12, so daß er als Führung für diesen dient.

Der Gassack 10 wird in der folgenden Weise zusammengeschoben: zunächst wird der Gassack 10 am Mittelabschnitt 22 befestigt. Dann wird er mittels der Aufblasvorrichtung entfaltet, wobei er aufgrund der dem Mittelabschnitt 22 gegenüberliegenden Gegenfläche 26 eine Form hat, die im Vergleich mit einem frei im Raum entfalteten Zustand stark abgeplattet ist. Dann wird der Falttrichter 12 in der Richtung des Pfeils P nach unten bewegt, wobei die Innenfläche des Falttrichters am Gassack angreift und ihn von außen nach innen, also bezüglich der Mittelachse des Stempels 24 in radialer Richtung, zusammenschiebt. Dabei werden die Segmente 20 entsprechend der Verengung des Querschnitts des Falttrichters 12 nach unten herausgezogen, so daß sie das Herunterschieben des Falttrichters 12 nicht behindern, und die Aufblasvorrichtung ermöglicht ein kontrolliertes Entlüften des Gassacks. Der Gassack 10 ist vollständig auf die in Figur 1 gestrichelt dargestellte Form 10' zusammengeschoben, wenn sich das Ende 16 des Falttrichters im Bereich zwischen dem Mittelabschnitt 22 und der Gegenfläche 26 des Stempels befindet (in Figur 1 gestrichelt als 16' dargestellt).

In Figur 2 ist eine zweite Faltmaschine gezeigt, mittels der ein Gassack durch ein Faltverfahren gemäß einer zweiten Ausführungform zusammengeschoben werden kann. Für die von der ersten Ausführungsform bekannten Bauteile werden dieselben Bezugszeichen verwendet, und es wird auf die obigen Erläuterungen verwiesen.

Im Unterschied zur ersten Ausführungsform ist bei der zweiten Ausführungsform die Unterlage 18 als starre Platte ausgebildet, auf welcher der Gassack 10 entfaltet wird. Dagegen besteht nunmehr der Falttrichter 12 aus einer Vielzahl von aneinanderhängenden, jedoch relativ zueinander beweglichen Ringen 28. Jeder Ring 28 weist an seinem oberen Ende einen nach innen umgebogenen Rand und an seinem unteren Ende einen nach außen umgebogenen Rand auf. Der nach innen umgebogene Rand am oberen Ende jedes Ringes 28 liegt oberhalb des nach außen umgebogenen Randes des darüberliegenden Ringes. Zum Zusammenlegen des Gassacks wird der Falttrichter 12 nach unten abgesenkt, so daß nach und nach die Ringe auf der Unterlage 18 aufliegen. Dabei wird die Wandung des Gassacks 10 bei jedem neuen Ring, der die Unterlage 18 erreicht, ein bißchen weiter nach innen gedrückt, bis der Gasack schließlich eine Querschnittsform hat, die mit der Querschnittsform des Stempels 24 übereinstimmt.

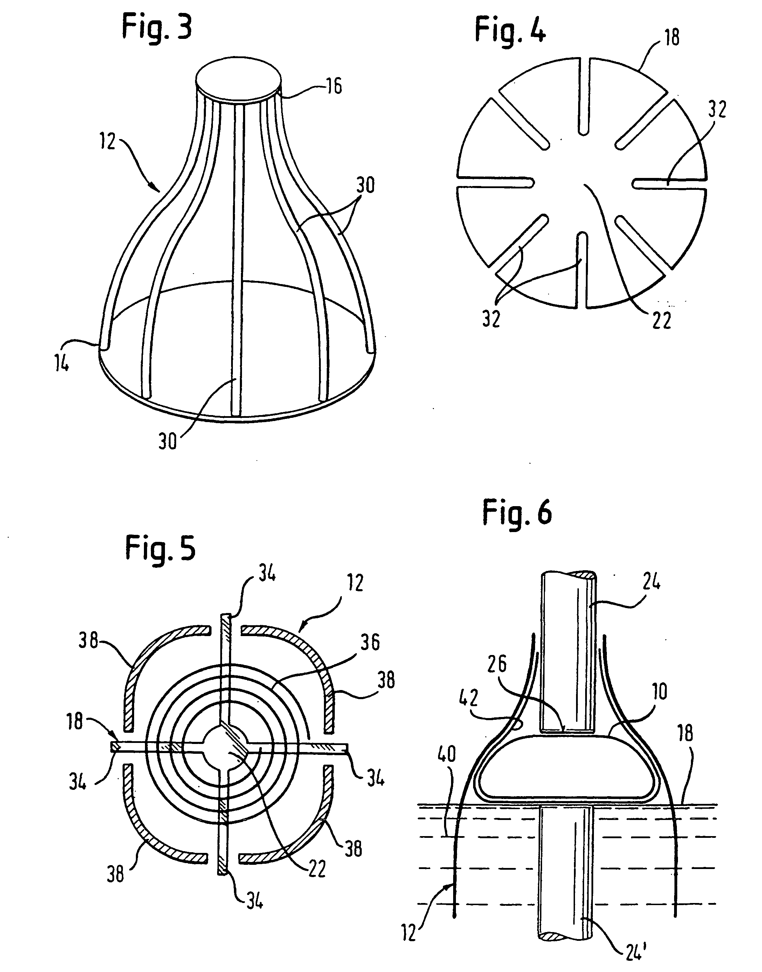

In Figur 3 ist schematisch ein Falttrichter für eine dritte Faltmaschine gezeigt. Ähnlich wie bei der in Figur 1 gezeigten Ausführungsform hat der Falttrichter 12 eine Flaschenhals-ähnliche Form. Der Falttrichter weist jedoch keine flächige Wand auf, sondern ist gebildet durch mehrere nebeneinanderliegende Stangen 30, die am ersten Ende 14 und am zweiten Ende 16 des Falttrichters 12 miteinander verbunden sind.

In Figur 4 ist die Unterlage 18 gezeigt, die zusammen mit dem Falttrichter 12 von Figur 3 verwendet wird. Die Unterlage 18 besteht hier aus einer Platte, in der mehrere Schlitze 32 vorgesehen sind. Die Schlitze 32 sind so angeordnet und ausgeführt, daß die Stangen 30 des Falttrichters 12 in sie eintauchen können.

Zum Zusammenlegen des Gassacks wird dieser auf der Unterlage 18 entfaltet, wobei auch hier ein gegenüberliegender Stempel verwendet wird. Dann wird der Falttrichter 12, beginnend mit seinem ersten Ende 14 mit großem Querschnitt, über die Unterlage 18 geschoben, so daß die Stangen 30 in die Schlitze 32 eintreten und dabei den Gassack nach innen zur Mitte hin drängen. Die Breite der Schlitze 32 ist so bemessen, daß die Wandung des Gassacks nicht in die Schlitze 32 eindringen und sich dort mit den Stangen 30 verklemmen kann. Außerdem ist der Abstand der Stangen 30 untereinander so bemessen, daß der Gassack nicht nach außen aus dem Falttrichter entweichen kann.

In Figur 5 ist schematisch ein Schnitt durch eine vierte Faltmaschine gezeigt, wobei dieser Schnitt radial bezüglich der Längsachse des verwendeten Stempels und etwa im Bereich des ersten Endes 14 des Falttrichters vorgenommen wurde.

Die Unterlage 18 weist hier wieder einen Mittelabschnitt 22 auf, von dem ausgehend sich vier Stützstege 34 radial nach außen erstrecken. Die Unterlage 18 weist weiterhin eine Spiralfeder 36 auf, die auf den Stützstegen 34 aufliegt.

Der Falttrichter 12 besteht hier aus vier Wandsegmenten 38, die in einem solchen Abstand relativ zueinander angeordnet sind, daß zwischen Ihnen ein Schlitz zum Durchtritt der Stützstege 34 gebildet ist. Die Wandsegmente 38 verlaufen jeweils so, daß sie zusammen wieder einen Flaschenhals-förmigen Falttrichter bilden.

Der zu faltende Gassack wird am Mittelabschnitt 22 angebracht und entfaltet. Die auf den Stützstegen 34 aufliegende Spiralfeder 36 dient zur Abstützung des Gassacks nach unten. Wenn der Falttrichter axial auf die Unterlage 18 geschoben wird, drücken die Innenseiten der Wandsegmente 38 die Wandung des Gassacks nach innen, wobei auch die Spiralfeder radial nach innen gedrückt wird, so daß sie den Falttrichter nicht behindert. Der Abstand der Windungen der Spiralfeder voneinander sowie der Schlitz zwischen den Wandsegmenten 38 des Falttrichters 12 ist so bemessen, daß sich der Gassack dort nicht verklemmen kann.

In Figur 6 ist eine fünfte Faltmaschine gezeigt. Diese verwendet denselben Falttrichter 12 wie die in Figur 1 gezeigte Faltmaschine. Die Unterlage 18 wird bei dieser Faltmaschine durch die Oberfläche einer Flüssigkeit 40 gebildet, beispielsweise Wasser. Bei dieser Ausführungsform ist der Gassack an der Gegenfläche 26 des Stempels 24 befestigt, so daß er sich zwischen der Oberfläche 18 der Flüssigkeit 40 und der Gegenfläche 26 entfaltet. Der Falttrichter 12 taucht bei dieser Ausführungsform beim Verstellen einfach in die Flüssigkeit 40 ein. Der Gassack 10 wird dagegen, da er mit Luft gefüllt ist, durch seinen Auftrieb gehindert, in die Flüssigkeit 40 einzutauchen; er wird auf der Oberfläche der Flüssigkeit 40 von der Wandung des Falttrichters 12 radial von außen nach innen zusammengedrückt. Bei dieser Ausführungsform wird der Gassack vor dem Entfalten in eine Packhülle 42 eingelegt, die sich innerhalb des Falttrichters und zwischen der Oberfläche 18 der Flüssigkeit 40 und dem Gassack 10 erstreckt. Wenn der Gassack vollständig zusammengeschoben ist, kann die Packhülle verschlossen werden, so daß der Gassack in seinem gefalteten Zustand fixiert ist.

Falls die Packungsdichte so groß sein sollte, daß nicht genügend Auftrieb vorhanden ist, kann ein Gegenstempel 24' gleicher Größe wie der Stempel 24 in der Flüssigkeit vorhanden sein, der an der Flüssigkeitsoberfläche endet. Gegebenenfalls kann bei dieser Variante der Stempel 24 später als der Falttrichter 12 abgesenkt werden.

## Patentansprüche

1. Verfahren zum Falten eines Gassacks für ein Fahrzeuginsassen-Rückhaltesystem mittels der folgenden Schritte:
- der Gassack (10) wird zwischen einer Unterlage (18) und einer Gegenfläche (26) mittels einer Aufblasvorrichtung entfaltet, wobei der Abstand zwischen der Unterlage und der Gegenfläche der Höhe eines Gehäuses entspricht, in das der Gassack nach dem Falten eingebracht werden soll;
- es wird ein Falttrichter (12) bereitgestellt, der ein Ende (14) mit großem Querschnitt und ein Ende (16) mit kleinem Querschnitt aufweist, wobei der große Querschnitt größer oder gleich dem Querschnitt des zwischen der Unterlage (18) und der Gegenfläche (26) entfalteten Gassacks (10) ist und der kleine Querschnitt dem Querschnitt des Gehäuses entspricht;
- der Falttrichter (12) wird beginnend mit seinem großen Querschnitt über den entfalteten Gassack (10) gestülpt, so daß der Gassack vom Falttrichter (12) auf der Unterlage (18) bis auf den kleinen Querschnitt zusammengeschoben wird.

2. Verfahren nach Anspruch 1, **dadurch gekennzeichnet, daß** die Gegenfläche (26) eine Form hat, die der Querschnittsform des Gehäuses entspricht.

3. Verfahren nach Anspruch 1 oder Anspruch 2, **dadurch gekennzeichnet, daß** die Unterlage (18) einen Mittelabschnitt (22) aufweist, dessen Form der Querschnittsform des Gehäuses entspricht.

4. Verfahren nach einem der Ansprüche 1 bis 3, **dadurch gekennzeichnet, daß** die Unterlage (18) durch einen Boden gebildet ist, der aus mehreren Segmenten (20) besteht, die entsprechend der Verringerung des Querschnitts des Falttrichters entfernt werden.

5. Verfahren nach einem der Ansprüche 1 bis 3, **dadurch gekennzeichnet, daß** die Unterlage (18) auf einer Spiralfeder (36) gebildet ist, die entsprechend der Verringerung des Querschnitts des Falttrichters zusammengeschoben wird.

6. Verfahren nach einem der Ansprüche 1 bis 3, **dadurch gekennzeichnet, daß** die Unterlage (18) durch die Oberfläche einer Flüssigkeit (40) gebildet ist.

7. Verfahren nach einem der Ansprüche 1 bis 3, **dadurch gekennzeichnet, daß** die Unterlage mit Schlitzen (32) versehen ist, die sich bis hin zu einem Mittelabschnitt (22) erstrecken.

8. Verfahren nach einem der vorhergehenden Ansprüche, **dadurch gekennzeichnet, daß** sich der Falttrichter (12) ausgehend von seinem großen Querschnitt stetig verjüngt.

9. Verfahren nach einem der Ansprüche 1 bis 7, **dadurch gekennzeichnet, daß** sich der Falttrichter (12) ausgehend von seinem großen Querschnitt stufenartig verjüngt.

10. Verfahren nach einem der vorhergehenden Ansprüche, **dadurch gekennzeichnet, daß** der Falttrichter (12) eine geschlossene Wand aufweist.

11. Verfahren nach einem der Ansprüche 1 bis 9, **dadurch gekennzeichnet, daß** der Falttrichter (12) durch mehrere nebeneinanderliegende Stäbe (30) gebildet sind.

12. Verfahren nach einem der Ansprüche 1 bis 9, **dadurch gekennzeichnet, daß** der Falttrichter (12) durch mehrere nebeneinanderliegende Wandsegmente (38) gebildet sind, zwischen denen sich ein Spalt befindet.

13. Verfahren nach einem der vorhergehenden Ansprüche, **dadurch gekennzeichnet, daß** der Gassack von einer Packhülle (42) umgeben ist, die sich zwischen seiner Wandung und dem Falttrichter (12) erstreckt.

14. Gefalteter Gassack (10) für ein Fahrzeuginsassen-Rückhaltesystem, der mittels eines Verfahrens nach einem der vorhergehenden Ansprüche gefaltet ist, mit einer Wandung, die eine Vielzahl von chaotisch verlaufenden Einzelfalten aufweist, wobei der Gassack (10) eine im wesentlichen ebene obere Außenseite und eine im wesentlichen ebene untere Außenseite aufweist, **dadurch gekennzeichnet, daß** an einer der Außenseiten mehr Einzelfalten vorhanden sind als an der anderen Außenseite.

15. Gefalteter Gassack nach Anspruch 14, **dadurch gekennzeichnet, daß** die Wandung im Bereich einer der Außenseiten, ungeachtet der Einzelfalten, gestreckter verläuft als an der anderen Außenseite.

## Claims

1. A method of folding a gas bag for a vehicle occupant restraint system comprising the following steps:
- unfolding the gas bag (10) between a base (18) and an opposing surface (26) by means of an inflation device, the spacing between the base and the opposing surface corresponding to the height of a housing into which the gas bag is to be inserted after folding;
- providing a folding funnel (12) which has an end (14) having a large cross-section and an end (16) having a small cross-section, the large cross-section being larger than or equal to the cross-section of the gas bag (10) when unfolded between the base (18) and the opposing surface (26), and the small cross-section corresponding to the cross-section of the housing;
- beginning with its large cross-section, the folding funnel (12) is placed over the unfolded gas bag (10), so that the gas bag is pushed together on the base (18) by the folding funnel (12) to the small cross-section.

2. The method as set forth in claim 1, **characterized in that** the opposing surface (26) has a shape corresponding to the cross-sectional shape of the housing.

3. The method as set forth in claim 1 or claim 2, **characterized in that** the base (18) comprises a middle section (22), the shape of which corresponds to the cross-sectional shape of the housing.

4. The method as set forth in any of claims 1 to 3, **characterized in that** the base (18) is formed by a bottom consisting of a plurality of segments (20) that are removed in accordance with the reduction in the cross-section of the folding funnel.

5. The method as set forth in any of claims 1 to 3, **characterized in that** the base (18) is formed on a coil spring (36) which is pushed together in accordance with the reduction in the cross-section of the folding funnel.

6. The method as set forth in any of claims 1 to 3, **characterized in that** the base (18) is formed by the surface of a liquid (40).

7. The method as set forth in any of claims 1 to 3, **characterized in that** the base is provided with slots (32) extending up to a middle section (22).

8. The method as set forth in any of the preceding claims, **characterized in that** the folding funnel (12) is continuously tapered, starting from its large cross-section.

9. The method as set forth in any of claims 1 to 7, **characterized in that** the folding funnel (12) is tapered stepwise, starting from its large cross-section.

10. The method as set forth in any of the preceding claims, **characterized in that** the folding funnel (12) has a closed wall.

11. The method as set forth in any of claims 1 to 9, **characterized in that** the folding funnel (12) is formed by a plurality of juxtaposed rods (30).

12. The method as set forth in any of claims 1 to 9, **characterized in that** the folding funnel (12) is formed by a plurality of juxtaposed wall segments (38) between which a gap is provided.

13. The method as set forth in any of the preceding claims, **characterized in that** the gas bag is surrounded by a packing envelope (42) extending between the gas bag wall and the folding funnel (12).

14. A folded gas bag (10) for a vehicle occupant restraint system, the gas bag having been folded by means of a method as set forth in any of the preceding claims, comprising a wall having a multitude of chaotically oriented single folds, the gas bag (10) including an upper, substantially flat outer side and a lower, substantially flat outer side, **characterized in that** more single folds are provided in one of the outer sides than in the other outer side.

15. The folded gas bag as set forth in claim 14, **characterized in that** in the region of one of the outer sides, irrespective of the single folds, the wall runs straighter than at the other outer side.

## Revendications

1. Procédé de pliage d'un coussin à gaz pour un système de retenue de passager de véhicule comprenant les étapes suivantes :
- on déplie le coussin à gaz (10) entre une base (18) et une surface antagoniste (26) au moyen d'un dispositif de soufflage, la distance entre la base et la surface antagoniste correspondant à la hauteur d'un boîtier dans lequel le coussin à gaz doit être inséré après le pliage ;
- on prépare un entonnoir de pliage (12) qui présente une extrémité (14) avec grande section transversale et une extrémité (16) avec petite section transversale, la grande section transversale étant supérieure ou égale à la section transversale du coussin à gaz (10) déplié entre la base (18) et la surface antagoniste (26) et la petite section transversale correspondant à la section transversale du boîtier ;
- on enfile l'entonnoir de pliage (12) sur le coussin à gaz (10) déplié en commençant par sa grande section transversale, de telle sorte que le coussin à gaz est rassemblé par l'entonnoir de pliage (12) sur la base (18) jusqu'à la petite section transversale.

2. Procédé selon la revendication 1, **caractérisé en ce que** la surface antagoniste (26) a une forme qui correspond à la forme de la section transversale du boîtier.

3. Procédé selon la revendication 1 ou la revendication 2, **caractérisé en ce que** la base (18) présente un tronçon médian (22) dont la forme correspond à la forme de la section transversale du boîtier.

4. Procédé selon l'une des revendications 1 à 3, **caractérisé en ce que** la base (18) est formée par un fond qui est constitué par plusieurs segments (20) qui sont enlevés selon la réduction de la section transversale de l'entonnoir de pliage.

5. Procédé selon l'une des revendications 1 à 3, **caractérisé en ce que** la base (18) est formée sur un ressort en spirale (36) qui est comprimé selon la réduction de la section transversale de l'entonnoir de pliage.

6. Procédé selon l'une des revendications 1 à 3, **caractérisé en ce que** la base (18) est formée par le surface d'un liquide (40).

7. Procédé selon l'une des revendications 1 à 3, **caractérisé en ce que** la base (18) est pourvue de fentes (32) qui s'étendent jusqu'à un tronçon médian (22).

8. Procédé selon l'une des revendications précédentes, **caractérisé en ce que** l'entonnoir de pliage (12) se rétrécit de façon continue depuis sa grande section transversale.

9. Procédé selon l'une des revendications 1 à 7, **caractérisé en ce que** l'entonnoir de pliage (12) se rétrécit en gradins depuis sa grande section transversale.

10. Procédé selon l'une des revendications précédentes, **caractérisé en ce que** l'entonnoir de pliage présente une paroi fermée.

11. Procédé selon l'une des revendications 1 à 9, **caractérisé en ce que** l'entonnoir de pliage (12) est formé par plusieurs barres (30) situées les unes à côté des autres.

12. Procédé selon l'une des revendications 1 à 9, **caractérisé en ce que** l'entonnoir de pliage (12) est formé par plusieurs segments de paroi (38) situés les uns à côté des autres, entre lesquels se trouve une fente.

13. Procédé selon l'une des revendications précédentes, **caractérisé en ce que** le coussin à gaz est entouré par une enveloppe d'emballage (42) qui s'étend entre sa paroi et l'entonnoir de pliage (12).

14. Coussin à gaz (10) plié pour un système de retenue de passager de véhicule, lequel est plié au moyen d'un procédé selon l'une des revendications précédentes, comportant une paroi qui présente une multitude de plis individuels orientés de façon chaotique, le coussin à gaz (10) présentant une face extérieure supérieure sensiblement plane et une face extérieure inférieure sensiblement plane, **caractérisé en ce qu'**il se trouve plus de plis individuels sur une des faces extérieure que sur l'autre face extérieure.

15. Coussin à gaz plié selon la revendication 14, **caractérisé en ce que** dans la région de l'une des faces extérieures, la paroi s'étend, nonobstant les plis individuels, de façon plus étirée que sur l'autre face extérieure.
